**Europäisches Patentamt**

**European Patent Office**

**Office européen des brevets**

(19)

(11) Veröffentlichungsnummer: **0 056 591**

**A1**

(12) # EUROPÄISCHE PATENTANMELDUNG

(21) Anmeldenummer: **82100110.4**

(22) Anmeldetag: **09.01.82**

(51) Int. Cl.$^3$: **C 09 K 5/06**

(30) Priorität: **15.01.81 DE 3101045**

(43) Veröffentlichungstag der Anmeldung:
**28.07.82 Patentblatt 82/30**

(84) Benannte Vertragsstaaten:
**AT CH DE FR GB LI NL SE**

(71) Anmelder: **HOECHST AKTIENGESELLSCHAFT**
**Postfach 80 03 20**
**D-6230 Frankfurt/Main 80(DE)**

(72) Erfinder: **Schott, Martin, Dr.**
**Königsteiner Strasse 7**
**D-6374 Steinbach(DE)**

(72) Erfinder: **Behme, Klaus Jürgen**
**Kurmainzer Strasse 25**
**D-6239 Eppstein/Taunus(DE)**

(54) **Latentwärmespeicher und Verfahren zu seiner Herstellung.**

(57) In einem Latentwärmespeicher, der aus einem Speicherbehälter und einer Füllung eines inkongruent schmelzenden Salzhydrats (Beispiel: $Na_2HPO_4 . 12 H_2O$) besteht, ist das Salzhydrat in einer Matrix eines synthetischen organischen Polymeren mit offenzelliger Schaumstruktur (Beispiel: Polyurethan-Schaum) untergebracht. Das Absetzen von höher schmelzenden Salzhydraten und das allmähliche Unwirksamwerden der Speichermasse wird auf diese Weise vermieden. Ein solcher Speicher läßt sich dadurch herstellen, daß man einen Speicherbehälter mit einem synthetischen organischen Polymer ausschäumt, das unter den Reaktionsbedingungen einen offenzelligen Schaum bildet, man den Schaum aushärtet, und man ein geschmolzenes Salzhydrat als Speichermedium in den ausgeschäumten Speicherbehälter einfüllt.

EP 0 056 591 A1

HOECHST AKTIENGESELLSCHAFT     HOE 81/F 005     0056591

Latentwärmespeicher und Verfahren zu seiner Herstellung

Die Erfindung betrifft einen Latentwärmespeicher mit einem inkongruent schmelzenden anorganischen Salzhydrat als Speichermedium. Ferner betrifft die Erfindung ein Verfahren zur Herstellung des Wärmespeichers.

Wärmespeicher, die die Kristallisationsenthalpie von Schmelzen anorganischer Salzhydrate zur Wärmespeicherung ausnützen, sind bekannt. Solche Speicher werden immer dann benötigt, wenn Angebot und Bedarf an thermischer Energie zeitlich von einander abweichen. Für einen Temperaturbereich nahe Raumtemperatur (d.h. 20°C), wie er vor allem für Heizungs- und Klimaanlagen von Interesse ist, bieten sich gerade Salzhydrate als Speichermaterial an, da sie infolge ihrer latenten Schmelz- bzw. Erstarrungwärme eine hohe Wärmekapazität pro Volumeneinheit aufweisen. Man kann deshalb mit einem wesentlich kleineren Speichervolumen auskommen, als dies bei Verwendung von Wasser als Speichermaterial der Fall ist. Als Speichermedium für Latentwärmespeicher in Heizungs- und Klimaanlagen, die Niedertemperaturwärme direkt oder mittels Wärmepumpe ausnutzen, kommen unter anderem Salzhydrate infrage, deren Schmelzpunkt einige Grad über Raumtemperatur liegt.

Einerseits soll ein Latentwärmespeicher bei möglichst niedriger Temperatur Wärme aufnehmen, d.h. der Schmelzpunkt des Salzhydrates soll niedrig sein, damit die Wärmespeicherung möglichst ohne zusätzliches Aufheizen des verfügbaren Wärmeträgerfluids (z.B. durch eine Wärmepumpe) erfolgen kann. Andererseits soll die Wärmeabgabe bei möglichst hoher Temperatur erfolgen, d.h. die Erstarrungstemperatur soll soweit über Raumtemperatur liegen, daß die gespeicherte Wärme bei einer für Heizzwecke noch ausreichend hohen Temperatur abgegeben werden kann und eine Wärmepumpe nicht eingesetzt werden muß. Da sich die Forderungen nach niedriger Schmelztemperatur und hoher Erstarrungstemperatur nicht gleichzeitig erfüllen lassen, muß man als Kompromiß einen Temperaturbereich wählen, in dem man bei Speicherung und Wärmeabgabe insgesamt mit möglichst wenig zusätzlicher Energie (z.B. durch eine Wärmepumpe) auskommt. Für die Raumheizung bieten sich deshalb Salzhydrate an, deren Schmelzpunkt zwischen ungefähr $25^{o}C$ und ungefähr $40^{o}C$ liegt.

Solche Salzhydrate sind z.B. Dinatriumphosphat-Dodekahydrat $Na_2HPO_4 \cdot 12\ H_2O$ (Fp. $35,2^{o}C$), Glaubersalz $Na_2SO_4 \cdot 10\ H_2O$ (Fp. $32,4^{o}C$) und $CaCl_2 \cdot 6\ H_2O$ (Fp. $29,2^{o}C$).

Ein weiteres wichtiges Kriterium ist die Speicherfähigkeit für Wärme. Die wesentliche Kennzahl ist die Schmelzenthalphie pro $dm^3$, da sich daraus das benötigte Speichervolumen ableiten läßt. Die Schmelzenthalpie von $Na_2HPO_4 \cdot 12\ H_2O$ beträgt 404 $kJ/dm^3$ und ist damit wesentlich höher als die von $Na_2SO_4 \cdot 10\ H_2O$ (354 $kJ/dm^3$) und $CaCl_2 \cdot 6H_2O$ (258 $kJ/dm^3$).

Die vorliegende Erfindung betrifft daher die Entwicklung eines geeigneten Wärmespeichers, der inkongruent schmelzende Salzhydrate, insbesondere mit hoher spezifischer Schmelzenthalphie, als Speichermedium enthält.

Beim inkongruenten Schmelzen von Salzhydraten entstehen neben einer an Salz gesättigten wäßrigen Lösung noch feste Hydrate , die niedrigeren Wassergehalt und höheren Schmelzpunkt zeigen als das ursprünglich eingesetzte Salzhydrat. Die neugebildeten Hydrate sind spezifisch schwerer und sinken im Wärmespeichergefäß nach unten. Da die überstehende Lösung einen niedrigeren Salzgehalt als das ursprüngliche Salzhydrat hat, bilden sich im nächsten Erstarrungsvorgang 3 Schichten: unten das beim Schmelzen entstandene niedere Hydrat, darüber Hydrat in der ursprünglichen Zusammensetzung und oben eine gesättigte Salzlösung. Diese Entmischung oder Stratifikation führt dazu, daß beim

- 3 -

0056591

nächsten Schmelzvorgang nur noch die mittlere Schicht beteiligt ist. Die Wärmekapazität des Systems nimmt daher ab. Beispielsweise kann aus dem Dodekahydrat des Dinatriumhydrogenphosphats beim Schmelzen ein Heptahydrat und, wenn die Entmischung schon weitgehend fortgeschritten ist, sogar noch ein Dihydrat entstehen. Um die geschilderte Entmischung weitgehend zu unterdrücken müssen die beim Schmelzvorgang entstehenden niederen Hydrate am Absinken gehindert werden, damit beim nächsten Erstarrungsvorgang im wesentlichen das Hydrat der ursprünglichen Zusammensetzung auskristallisiert.

Um diese Entmischung zu verhindern, hat man bereits mineralische Verdickungsmittel eingesetzt, so z.B. Attapulgit-Ton (DE-OS 26 39 173). Nachteilig ist dabei, daß man erhebliche Mengen dieser Verdickungsmittel braucht, die nur wenig zur Wärmespeicherung beitragen. Auch organische Verdickungsmittel sind zu diesem Zweck empfohlen worden. So wird z.B. speziell für das Speichermedium Dinatriumhydrogenphosphat gemäß DE-OS 28 32 670 Gelatine zugesetzt. Diese Mischungen haben aber den Nachteil, daß die Erstarrung erst bei niedrigerer Temperatur eintritt.

Eine andere Methode zur Verhinderung der Entmischung wird in der europäischen Offenlegungsschrift 11 411 aufgeführt. Sie besteht darin, das Salzhydrat in einem Gel eines wasserlöslichen oder wasserdispergierbaren synthetischen organischen Polymeren zu verteilen und das Gel durch Zusatz weiterer Komponenten zu vernetzen und so zum Erstarren zu bringen. Damit es hierbei zu einer gleichmäßigen Verteilung des Salzhydrates kommt, ist kräftiges Rühren notwendig, was im Inneren vieler Wärmespeicher-Behälter nicht durchführbar ist. Man könnte zwar diese Verteilung in einem besonderen Mischgefäß vornehmen, aber es ist schwierig dieses genau in dem Zeitpunkt zu entleeren, in dem die Erstarrung der Mischung noch nicht zu weit fortgeschritten ist.

0056591

Ein weiteres Problem besteht in der Neigung des Salzhydrates zur Unterkühlung, durch die die Temperatur, bei der die Erstarrung und damit die Abgabe der gespeicherten Wärmeenergie beginnt, erniedrigt wird. Um die Unterkühlung der Schmelze von Dinatriumphosphat-Hydrat möglichst gering zu halten, werden gemäß US-PS 2 677 367 Körper aus Glas mit rauher Oberfläche im oberen Teil der Schmelze des Systems vorgesehen. Geeignet soll z.B. zellulares Glas sein, das oben auf der Schmelze schwimmt. Damit läßt sich zwar die Unterkühlung der Schmelze, nicht aber die oben erwähnte Entmischung vermeiden.

Zur Verhinderung der Unterkühlung von Speicherstoffen werden in manchen Fällen Kristallisationskeime eingearbeitet. Gemäß DE-OS 19 28 694 enthält zur Verhinderung der Verarmung der Schmelze an Impfkristallen der Speicher außer Speicherstoff und Impfkristallen ein Gerüst, welches einerseits den Speicherstoff in der flüssigen Phase wie ein Schwamm oder ein Schaum festhält, andererseits Impfkristalle in ihrer gleichmäßigen Verteilung fixiert. Durch geeignete Ausbildung der Gerüstsubstanz ist es gelegentlich auch möglich, daß die Gerüststruktur gleichzeitig den Impfstoff für den Speicherstoff bildet, so daß auf das Hinzufügen eines weiteren Impfstoffes verzichtet werden kann.

Für die Herstellung der Gerüste sind eine Reihe hochpolymerer Kunststoffe vorteilhaft. Im Falle von Hartschäumen wird die Impfkristallmasse schon bei der Herstellung dem Gerüststoff zugesetzt, damit sie nicht bei späterem Einbringen abfiltriert wird. Zur Herstellung von Gerüsten aus hochpolymeren Kunstharzen werden diese der heißen Schmelze des Speicherstoffs zugegeben. Bei einer Temperatur, bei der die Substanz für die Gerüststruktur bereits schmilzt, wird dann die Schmelze emulgiert und zur Verhinderung einer Entmischung möglichst plötzlich zur Erstarrung gebracht.

Es bestand daher die Aufgabe, für den Einsatz von inkongruent schmelzenden anorganischen Salzhydraten als Hauptkomponente von Latentwärmespeichermassen ein geeignetes System zu finden, das die Entmischung der Schmelze weitgehend verhindert, einfach anwendbar ist und eine hohe Ausnutzung des verfügbaren Speichervolumens erlaubt. Dabei sollte auf die Verwendung von Impfkristallen verzichtet werden können.

Es wurde nun ein Latentwärmespeicher bestehend aus einem Speicherbehälter und einer Füllung eines inkongruent schmelzenden anorganischen Salzhydrats als Speichermedium gefunden, der dadurch gekennzeichnet ist, daß das Speichermedium in einer Matrix eines synthesischen organischen Polymers mit offenzelliger Schaumstruktur vorliegt.

Als Speicherbehälter können allgemein wasserdichte Behälter wie Kunststoff- oder Metalltanks, insbesondere mit einer wärmeisolierenden Beschichtung verwendet werden.

Als organische Matrixsubstanz eignen sich insbesondere Polyurethane, Harnstoff-Formaldehydharze, Phenolharze oder Viskose. Das aus diesen Polymeren bestehende Gerüst muß eine offenzellige Schaumstruktur aufweisen, d.h. wie ein Schwamm aufgebaut sein. Durch die Verbindung der Zellen untereinander mittels Poren wird es möglich, alle oder fast alle Hohlräume mit Salzhydrat zu füllen. Die Hohlräume oder Zellen sollen dabei so klein sein, daß auch nach mehrfachen Schmelzvorgängen eine räumliche Trennung der Schmelze in Schichten mit unterschiedlichem Wassergehalt dank Diffusion und Konvektion weitgehend verhindert wird. Hierfür reicht es aus, wenn der innere Durchmesser der Zellen des offenzelligen Schaumes höchstens 2 mm, noch besser höchstens 1 mm, beträgt. Das soll nicht bedeuten, daß keine größeren Zellen anwesend sein dürfen, was sich bei einem technischen Produkt nie ganz vermeiden läßt, doch ist der Effekt um so besser, je weniger große Zellen in dem Gerüst vorhanden sind. Zellen mit einem Zellendurchmesser unter 0,2 mm bringen keine zusätzlichen Vorteile, aber verringern bereits merklich das ausnutzbare Speichervolumen.

Die erfindungsgemäß benutzte Matrix weist nur einen sehr geringen Raumbedarf auf. Das Raumgewicht eines solchen offenzelligen Schaumes liegt vorteilhafterweise zwischen 5 und 50 g/l. Bei einer Dichte des gerüstbildenden Polymeren von 1 - 1,2 g/ml bedeutet dies, daß im Latentwärmespeicher nur ca. 0,5 - 5 % des Speichervolumens vom Gerüst eingenommen werden, während bis zu 99,5 % des Volumens mit Salzhydrat gefüllt sind. Diese Relation ist für die Praxis von großer Bedeutung, da man anstrebt, möglichst viel Energie in einem möglichst kleinen Volumen zu speichern. Der Anteil des Salzhydrats am gesamten Speichervolumen soll daher so hoch wie möglich gewählt werden. Alle eventuell noch anwesenden anderen Substanzen wie z.B. Verdickungsmittel oder Gerüstbildner, tragen nur mit ihrer geringen spezifischen Wärme zur Wärmespeicherung bei. Beim erfindungsgemäßen Wärmespeicher ist es überflüssig dem Speichermedium Impfkristalle zuzusetzen oder das Salzhydrat zunächst in einem nadelförmigen primären Gerüst aufzunehmen, wie dies in der DE-PS 1 928 694 empfohlen wird. Man hat bereits Balsaholz mit flüssigen Speichermassen getränkt, um Wärmespeicher zu erhalten. Im Vergleich hierzu ist die erfindungsgemäß eingesetzte Matrix einfacher in Speicherbehälter, insbesondere großer Abmessungen, einzubringen und leichter und (wegen der offenen Zellen) vollständiger mit Salzhydrat zu füllen.

Es ist vorteilhaft, daß der erfindungsgemäße Wärmespeicher leicht hergestellt werden kann. Es ist z.B. möglich, den mit offenzelligem Schaum gefüllten Speicherbehälter zu transportieren und ihn erst am Einsatzort mit Salzhydrat zu füllen. Weder für das Einbringen des Schaumes noch des Salzhydrates sind komplizierte Manipulationen erforderlich.

Die Herstellung eines als Matrix dienenden offenzelligen Schaumes, z.B. eines Polyurethan-Schaumes, kann in an sich bekannter Weise erfolgen. Beispielsweise kann man zunächst einen Schaumblock herstellen, aus dem Schaumteile geeigneter Abmessung geschnitten und in den Speicherbehälter eingebracht werden. Am besten ist es hierbei, wenn man einen elastischen Schaum verwendet und die Schnitteile (z.B. Platten) etwas größere Abmessungen als die auszufüllenden Hohlräume aufweisen, da sie danach an den Wandflächen oder Einbauten, wie z.B. Wärmeaustauscherelementen, fest anliegen. Mit Wärmeaustauscherelementen werden hier Hohlkörper verstanden, die an der Wand des Speicherbehälters und/oder im Inneren des Speicherbehälters angeordnet sind, wie z.B. Rohre aus Metall oder Kunststoff oder Schläuche, die von einem fluiden Wärmeträgermedium bei Benutzung des Speichers durchströmt werden.

Ein besonders bevorzugtes Verfahren zur Herstellung des erfindungsgemäßen Latentwärmespeichers ist dadurch gekennzeichnet, daß man einen Speicherbehälter, der gegebenenfalls fixierte Wärmeaustauscherelemente aufweist, mit einem organischen Polymer ausschäumt, das unter den Reaktionsbedingungen einen offenzelligen Schaum bildet, der aushärtet und man nach Aushärten des Schaums ein geschmolzenes inkongruent schmelzendes anorganisches Salzhydrat als Speichermedium in den ausgeschäumten Speicherbehälter einfüllt.

Der Schaum kann z.B. durch Wärmeeinwirkung und/oder durch chemische Reaktion aushärten. Das Aufschäumen kann durch gasbildende Zusätze oder durch Abspaltung eines Gases bei der Polymerisation erreicht werden. Sofern im Inneren des Speicherbehälters Wärmeaustauscherelemente vorgesehen sind, müssen sie vor dem Einbringen des schäumenden Reaktionsgemisches in ihrer Lage fixiert werden.

Zur Verbesserung der Haftung zwischen den Austauscherflächen oder der Behälterwand und dem Schaum können die Flächen bzw. die Wand vor dem Ausschäumen mit einem Haftvermittler bestrichen werden.

Es ist besonders bevorzugt, daß man den Speicherbehälter mit einem Polyurethan-Schaum, insbesondere einem kalt härtenden Polyurethan-Schaum, mit offenzelliger Schaumstruktur ausschäumt.

Die Herstellung von Polyurethan-Schaumstoffen mit den verschiedenartigsten physikalischen Eigenschaften aus Polyisocyanaten und Verbindungen mit mehrerern aktiven Wasserstoffatomen ist dem Fachmann bekannt. Je nach Wahl der eingesetzten Polyisocyanate, Polyole, der vernetzenden Zusätze und der Katalysatoren können im Reaktionsprodukt Harnstoff-, Isocyanurat-, Carbodiimid-, Biuret-, und/oder Allophanat-Strukturen gebildet werden. Bei Zusatz von Wasser wird aus dem Polyisocyanat $CO_2$ abgespalten, das als Treibmittel wirkt. Darüberhinaus können auch niedrig siedende organische Flüssigkeiten, wie Trichlorfluormethan oder Methylenchlorid eigens als Treibmittel zugesetzt werden. Weitere mögliche Zusatzmittel sind Schaumstabilisatoren und zellöffnende Mittel (wie z.B. Silicone). Durch Abstimmung aller Komponenten ist es möglich, sowohl weich elastische als auch harte Polyurethan-Schaumstoffe mit offenzelliger Struktur herzustellen. Vor dem Ausschäumen eines größeren Behälters kann durch einen kleinen Testansatz leicht geprüft werden, ob Größe der Zellen und Anteil der offenen Zellen ausreichend sind.

Es ist ein Vorteil der direkten Behälterausschäumung, daß auch wenig zugängliche Kavernen erfaßt werden können.

Die Salzhydratschmelze kann unmittelbar nach der Aushärtung des Schaumstoffes oder auch zu einem späteren Zeitpunkt, z.B. am Betriebsort des Latentwärmespeichers, in den Schaum eingefüllt werden. Damit später die Salzhydratschmelze leichter in die Matrix eingebracht werden kann, ist es sinnvoll vor dem Ausschäumen ein Zulaufrohr, das unmittelbar über dem Boden des Behälters endet, vorzusehen. Mit Hilfe dieses Rohres kann die Salzlösung von unten nach oben steigend eingeführt werden, wobei das in den Schaumzellen enthaltene Gas gut nach oben entweichen kann. Die Mitverwendung eines Tensids mindert die Oberflächenspannung und beschleunigt den Füllvorgang. Das Zulaufrohr für die Salzlösung wird vorteilhafterweise am Auslaufende im Behälter mit einem Stück offenzelligen Schaumstoffs unterlegt, damit das Zulaufrohr nicht zugeschäumt wird. Auch andere leicht zugängliche Polymere eignen sich für die Direktausschäumung des Speicherbehälters, wie z.B. Harnstoff-Formaldehydharze oder Phenolharze.

Das Salzhydrat, das in die Schaummatrix eingeführt wird, besteht vorzugsweise aus Natriumsalzen, da diese meist höhere spezifische Latentwärme aufweisen als analoge Salze zweiwertiger Ionen. Besonders bevorzugt sind Natriumphosphate, insbesondere Dinatriumhydrogenphosphat-Dodekahydrat als Hauptkomponente. Dem Salzhydrat kann noch eine kleine Menge zusätzliches Wasser zugefügt werden, um sicherzustellen, daß durch eventuelle Verdunstungsverluste bis zu einer endgültigen Versiegelung des Wärmespeichers das theoretische Molverhältnis Wasser/Salz nicht unterschritten wird. Im Fall des Dinatriumhydrogenphosphat-Dodekahydrat kann die zusätzliche Wassermenge bis zu 2 Mol Wasser pro Mol $Na_2HPO_4 \cdot 12 H_2O$ betragen.

In einer besonderen Ausführungsform enthält die Schmelze neben $Na_2HPO_4$ auch $Na_3PO_4$ in einer Menge von 1 - 30, insbesondere 2 - 25 Mol-%. Durch diese Zusammensetzung wird die Stabilität der Phosphatschmelze gegen Entmischung weiter erhöht.

Überraschenderweise wurde gefunden, daß durch die erfindungsgemäße Verteilung der Salzhydratschmelze in einer offenzelligen Polymermatrix die Temperatur der beginnenden Erstarrung deutlich heraufgesetzt wird. Dies ist gleichbe-

0056591

deutend mit einer geringeren Unterkühlung der .Schmelze. So konnte das erfindungsgemäße System unter Verwendung von Dinatriumphosphat in über 600 Schmelz- und Erstarrungzyklen von je 4 Stunden Dauer ohne Schwierigkeiten bei 26°C zum Erstarren gebracht werden. Besondere Impfkristalle wurden dabei nicht verwendet. Eine obere Temperatur von 42°C reichte aus, um die kristalline Masse völlig aufzuschmelzen.

Die Erfindung wird durch die folgende Beispiele näher erläutert.

## Beispiel 1

Die in Tabelle 1 angegebenen Phosphatschmelzen wurden in Plastikrohren von 16 mm Weite und 190 mm Länge geprüft. Einige der Rohre wurden mit je einem Schaumstoffpropfen gefüllt und dieser dann mit der Salzschmelze getränkt. In die Rohre ohne Schaumstoff wurde ebenfalls Salzschmelze der gleichen Zusammensetzung gefüllt. Als Schaumstoff wurde offenzelliger elastischer Polyurethanschaum (Durchmesser der Zellen vorwiegend 0,3-0,6 mm) oder Viskoseschwamm eingesetzt.

Die Gewichtsmenge an Salzschmelze pro Volumen des Speichers und damit die Speicherkapazität werden durch die zusätzliche Schwammstruktur kaum verändert. So beträgt in dem System Phosphatschmelze/Polyurethanschaum das Eigenvolumen des Gerüstes nur ca. 2 %, das Volumen der mit Schmelze gefüllten Zellen also 98 % des Speichervolumens.

In den hier beschriebenen Versuchen wurden die gefüllten und verschlossenen Rohre von außen mit Wasser gekühlt und erwärmt in folgendem vierstündigen Zyklus:

| | | |
|---|---|---|
| Außentemperatur konstant bei | 42°C : | 1,7 Stunden |
| Abkühlen des Wassers auf | 26°C : | 0,3 Stunden |
| Außentemperatur konstant bei | 26°C : | 1,7 Stunden |
| Aufheizen des Wassers auf | 42°C : | 0,3 Stunden |

Wie die Ergebnisse in Tabelle 1 zeigen, wird die Stabilität der Salzhydratschmelze durch die Verteilung auf die Zellen des Schwammgerüstes wesentlich verbessert.

Beispiel 2

Zwei Bechergläser von 100 mm Durchmesser und 130 mm Höhe wurden mit je 1 l Phosphatschmelze von 55°C beschickt, nachdem das eine der beiden Glasgefäße zuvor mit einer spiralig aufgerollten Matte aus elastischem Polyurethanschaum (Raumgewicht 2 5 g/dm³) gefüllt worden war. Bei einer konstanten Außentemperatur von 25°C wurde die Veränderung der Temperatur in der Mitte der Gefäße verfolgt, um den Beginn der Erstarrung der Schmelze zu ermitteln. Dieser macht sich durch plötzlichen Anstieg der bis dahin langsam absinkenden Temperatur bemerkbar.

Es zeigte sich, daß bei dem Versuch A mit Polyurethanschaum die Erstarrung nach wesentlich kürzerer Abkühlzeit beginnt als beim Vergleichsversuch B , d. h. bei höherer Temperatur.

| Versuch | Schaumstoff | Beginn der Erstarrung nach | Temperatursprung bei Erstarrungsbeginn |
|---------|-------------|---------------------------|----------------------------------------|
| A | mit | 5,8 Std. | 32° ⟶ 39°C |
| B | ohne | 9,3 Std. | 27° ⟶ 34,5°C |

(Die Zusammensetzung der Phosphatschmelze war :

0,78 mol $Na_2HPO_4$ + 0,22 mol $Na_3PO_4$ + 13,2 mol $H_2O$ )

Beispiel 3

Das Polyurethan A von Beispiel 1 wurde ausgehend von einem Polyol für Blockschaum wie folgt hergestellt:
100 Gew.-Teile einer Glycerin/Propylenoxid/Ethylenoxid-Additionsverbindung (mittl.Molekulargewicht 3500, Hydroxylzahl 47, Anteil primärer Hydroxylgruppen 20 Mol-%) wurden mit 4,5 Gew.-T. Wasser, 1,2 Gew.-T.Schaumstabilisator auf Polysiloxanbasis, 0,36 Gew.-T. Triethylendiamin (gelöst in 0,72 Gew.-T. Dipropylenglykol), 0,22 Gew.-T Zinn-(II)-octoat, 15 Gew.-T. Trichlorfluormethan und 56,4 Gew.-T. Toluylendiisocyanat 80/20 innig vermischt und in einer Papierform aufgeschäumt. Es resultiert ein weichelastischer Schaumstoff mit einem Raumgewicht von 20 kg/m³.

Tabelle 1

| Versuch | Na$_2$HPO$_4$ (mol) | Na$_3$PO$_4$ (mol) | H$_2$O (mol) | pH-Wert | Schwamm | Raumgew. (g/dm$^3$) | Beurteilung |
|---|---|---|---|---|---|---|---|
| A | 0,78 | 0,22 | 12 | 11,3 | Polyurethan A | ~ 20 | > 600 Zyklen voll erstarrt und ge-schmolzen |
| B | 0,78 | 0,22 | 12 | 11,3 | - | | nach 48 Zyklen entmischt |
| C | 0,78 | 0,22 | 13,6 | 11,3 | Polyurethan A | ~ 20 | 500 Zyklen voll erstarrt und ge-schmolzen |
| D | 1 | - | 13,6 | 9,3 | - | | nach 12 Zyklen entmischt |
| E | 1 | - | 12 | 9,3 | Viskose | ~ 30 | > 200 Zyklen erstarrt und geschmol-zen |
| F | 1 | - | 12 | 9,3 | - | | nach 12 Zyklen entmischt |
| G | 0,92 | 0,08 | 13,6 | 10,6 | Polyurethan B | ~ 3 7 | nach 366 Zyklen noch einwandfrei |
| H | 0,92 | 0,08 | 13,6 | 10,6 | - | | nach 6 Zyklen nicht erstarrt |

Polyurethan A :   hergestellt durch Umsetzung von Isocyanat mit Polyolen
Polyurethan B :   hergestellt durch Umsetzung von Isocyanat mit Polyester-Polyol

Patentansprüche:

1. Latentwärmespeicher bestehend aus einem Speicherbehälter und einer Füllung eines inkongruent schmelzenden anorganischen Salzhydrats als Speichermedium, dadurch gekennzeichnet, daß das Speichermedium in einer Matrix eines synthetischen organischen Polymers mit offenzelliger Schaumstruktur vorliegt.

2. Latentwärmespeicher gemäß Anspruch 1, dadurch gekennzeichnet, daß im Inneren des Speichermediums Wärmetauscherelemente vorliegen.

3. Wärmespeicher gemäß Anspruch 1, dadurch gekennzeichnet, daß der mittlere Durchmesser der Zellen des Polymers mit offenzelliger Schaumstruktur höchstens 2 mm beträgt.

4. Wärmespeicher gemäß Anspruch 1, dadurch gekennzeichnet, daß das synthetische organische Polymer ein Polyurethan-Schaumstoff ist.

5. Wärmespeicher gemäß Anspruch 1, dadurch gekennzeichnet, daß die Matrix aus einem offenzelligen Harnstoff-Formaldehyd-Schaumstoff besteht.

6. Wärmespeicher gemäß Anspruch 1, dadurch gekennzeichnet, daß die Matrix aus einem offenzelligen Viskose-Schwamm besteht.

7. Wärmespeicher gemäß Anspruch 1, dadurch gekennzeichnet, daß als Speichermedium ein anorganisches Natriumsalz verwendet wird.

8. Speicher gemäß Anspruch 7, dadurch gekennzeichnet, daß als Speichermedium ein Natriumphosphat-Hydrat verwendet wird.

**0056591**

HOE 81/F 005

9. Speicher gemäß Anspruch 8, dadurch gekennzeichnet, daß das Speichermedium überwiegend aus Dinatriumhydrogenphosphat-Dodekahydrat besteht.

10. Wärmespeicher gemäß Anspruch 9, dadurch gekennzeichnet, daß als Speichermedium ein Gemisch von Dinatriumphosphat-Dodekahydrat mit 1 - 25 Mol-% Trinatriumphosphat-Dodekahydrat verwendet wird.

11. Verfahren zur Herstellung eines Latentwärmespeichers, dadurch gekennzeichnet, daß man einen Speicherbehälter der gegebenenfalls fixierte Wärmeaustauscherelemente aufweist, mit einem synthetischen organischen Polymer ausschäumt, das unter den Reaktionsbedingungen einen offenzelligen Schaum bildet, der aushärtet, und man nach Aushärten des Schaums ein geschmolzenes inkongruent schmelzendes anorganisches Salzhydrat als Speichermedium in den ausgeschäumten Speicherbehälter einfüllt.

12. Verfahren nach Anspruch 11, dadurch gekennzeichnet, daß man im Speicherbehälter einen Polyurethan-Schaum mit offenzelliger Schaumstruktur erzeugt.

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | <u>US - A - 4 003 426</u> (BEST) <br> * Ansprüche 1,6,7; Spalte 2, Zeilen 54-66 * <br> -- | 1,7 |
| YD | <u>DE - A - 1 928 694</u> (THERMO-BAU ELE-MENT) <br> * Ansprüche 1,5,8,10,20 * <br> -- | 1 |
| AD | <u>DE - A - 2 639 176</u> (UNIVERSITY OF DELAWARE) <br> * Ansprüche 1,13; Seite 5, Zeilen 19-30 * <br> ---- | 1,7,8, 9 |

**KLASSIFIKATION DER ANMELDUNG** (Int Cl ³)

C 09 K 5/06

**RECHERCHIERTE SACHGEBIETE** (Int. Cl.³)

C 09 K
F 24 J

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 26-03-1982 | NICOLAS |

EPA form 1503.1  06.78